# EUROPÄISCHE PATENTANMELDUNG

(11) **EP 0 573 835 A2**
(43) Veröffentlichungstag der Anmeldung: **15.12.1993**
(21) Anmeldenummer: 93108280.4
(22) Anmeldetag: 21.05.1993
(51) Int. Cl.: C09K 3/32

(54) **Verfahren zur Herstellung eines Grundstoffes**

(30) Priorität: 25.05.1992 DE 4217284
(71) Anmelder: Maroudas, Johann, D-30159 Hannover (DE)
(72) Erfinder: Maroudas, Johann, D-30159 Hannover (DE)
(74) Vertreter: Junius, Walther, Dr.

(57) **Zusammenfassung**

Die Erfindung betrifft ein Verfahren zur Herstellung eines Grundstoffes für dir Weiterverarbeitung in der chemischen Industrie sowie die Verwendung in der Beseitigung von Erdöl und in der Müllkompostierung. Es ist die Aufgabe der Erfindung, billige und in großen Mengen zur Verfügung stehende Rohstoffe zu nutzen, um Rohstoffe aus auslaufenden Resourcen zu ersetzen und einen Grundstoff zu schaffen, der preiswert für die verschiedensten Anwendungsmöglichkeiten zur Verfügung steht. Die Erfindung besteht darin, daß man Kalziumhydroxid und mineralisches und/oder pflanzliches und/oder tierisches Öl im Verhältnis 5:95 bis 95:5 zusammengibt und unter Zusatz von einer geringen Menge Milcheiweis enthaltender Stoffe unter Zugabe einer noch geringeren Menge Milch rührt und dadurch eine breiartige Substanz erhält.

## Beschreibung

Die Erfindung betrifft ein Verfahren zur Herstellung eines Grundstoffes für dir Weiterverarbeitung in der chemischen Industrie sowie die Verwendung in der Beseitigung von Erd- und anderen Ölen und Fetten sowie deren Produkten, von Kohlenwasserstoffen und in der Müllkompostierung.

Eine Vielzahl von Grundstoffen in der chemischen Industrie wird durch die Erschöpfung natürlicher Resourcen immer knapper und damit auch teurer. Die Erschließung neuer Resourcen ist, soweit überhaupt möglich, mit ständig wachsenden Kosten verbunden. Es besteht daher ein dringendes Bedürfnis, andere Grundstoffe aufzufinden und zu erschließen. Diese sollen aber möglichst umweltverträglich sein.

Ein in der Natur in ungeheuren Mengen vorkommender Stoff ist Kalziumkarbonat. Ganze Gebirge bestehen aus diesem Stoff, der vor allem als Baustoff, aber auch als Zuschlagstoff Verwendung findet. Durch die Behandlungen des Brennens und des anschließenden Löschens gewinnt man Kalziumhydroxid, dessen Preis fast ausschließlich durch den Preis des Feuerungsmateriales für den Brandvorgang bestimmt ist. Kalziumhydroxid ist ein recht billiger Stoff, der nahezu überall zur Verfügung steht.

Neben den in Lagerstätten vorkommenden Rohstoffen gibt es auch die sogenannten nachwachsenden Rohstoffe, die oftmals durch landwirtschaftliche Produktion erzeugt werden. Diese sind durch den aufgrund der Konkurrenzsituation erzeugten Preisdruck und die weitgehende Automatisierung ebenfalls billige Rohstoffe, die meist in Mengen zur Verfügung stehen.

Diese nachwachsenden Rohstoffe in Form von landwirtschaftlichen Produkten werden nun von der Landwirtschaft durch Tierhaltung veredelt. Hier fallen auf Schlachthöfen und in Molkereien sowie in den nachfolgenden Verwertungsstufen manche nicht oder nur teiweise verwerteten Produkte an, deren Beseitigung mit erheblichem Aufwand und Kosten verbunden ist. Diese der teuren und aufwendigen Beseitigung unterliegenden Produkte können aber noch wertvolle Rohstoffe darstellen, wenn es gelingt, sie durch Zusammenbringen mit anderen Stoffen weiter verwertbar zu machen.

Es ist die Aufgabe der Erfindung, billige und in großen Mengen zur Verfügung stehende Rohstoffe zu nutzen, um Rohstoffe aus auslaufenden Resourcen zu ersetzen und einen Grundstoff zu schaffen, der preiswert für die verschiedensten Anwendungsmöglichkeiten zur Verfügung steht.

Die Erfindung besteht darin, daß man Kalziumhydroxid oder andere Hydroxide der Erdalkali- oder Alkalimetalle und mineralisches und/oder pflanzliches und/oder tierisches Öl oder Fett im Verhältnis 1:95 bis 95:5 zusammengibt und unter Zusatz von einer geringen Menge Milcheiweis enthaltender Stoffe unter Zugabe einer noch geringeren Menge Milch rührt und dadurch eine breiartige Substanz erhält.

Aber auch die Verwendung von Zement ist möglich.

Hierdurch erhält man einen Grundstoff, der sich in verschiedenster Weise nutzen und verwerten läßt:
Eine Möglichkeit der Verwertung besteht darin, daß man die breiartige Substanz zum Aufsaugen und Einschließen von Öl verwendet. Das kann zur Verhinderung von Umweltschäden bei aus Behältern unerwünscht auslaufendem Öl der verschiedensten Art geschehen, das kann aber auch geschehen um Grundstoffe für die Weiterverarbeitung in der chemischen und kosmetischen Industrie zu erhalten. Das kann aber auch erfolgen, um die beiden genannten Möglichkeiten gemeinsam zu nutzen, also das bei der Beseitigung von unerwünscht auslaufendem Öl anfallende Produkt industriell weiter zu nutzen.

Eine Besonderheit besteht bei dem erfindungsgemäß erzeugten Grundstoff darin, daß man die breiartige Substanz als Nährboden für Bakterien verwendet. Das erbringt ganz neue Möglichkeiten der Verwertung und der Beseitigung von durch Bakterien vernichtbaren Abfällen insbesondere in der Müllbeseitigung, aber auch neue Möglichkeiten in der mikrobiologisch arbeitenden Industrie.

Eine weitere Möglichkeit der Weiterverarbeitung des erfindungsgemäß hergestellten Grundstoffes besteht darin, daß man die breiartige Substanz als Grundstoff für die Herstellung von festen bis schaumartigen Kunststoffen verwendet. Diese zeichnen sich zum Teil dadurch aus, daß sie nicht entflammbar sind.

Auch die Herstellung und der Ersatz von Kaseinprodukten ist auf diesem Wege möglich.

Andere Anwendungen bestehen in der Zigarettenindustrie zur Herstellung von Zusatzstoffen für Filter und Papier, denn es wurde herausgefunden, daß Teerprodukte mit dem erfindungsgemäßen Stoff gebunden werden.

Ein wichtige Anwendungsmöglichkeit des erfindungsgemäßen Grundstoffes besteht darin, daß man die breiartige Substanz als Grundstoff für die Herstellung von Farben und Lacken und Imprägnierungsmitteln verwendet. Insbesondere die Herstellung ungiftiger Druckfarben, wie sie in der Zigarettenindustrie benötigt werden, ist ein Einsatzgebiet. So kann man diese Substanzen aus Altöl mineralischer, pflanzlicher und tierischer Herkunft herstellen.

Eine weitere wichtige Anwendungsmöglichkeit des erfindungsgemäßen Grundstoffes besteht darin, daß man die breiartige Substanz als Grundstoff für die Herstellung von kosmetischen Artikeln, Seifen und Reinigungsmitteln auch für empfindliche und allergische Haut verwendet. Auch dient die erfindungsgemäße Substanz als Salbe und Salbengrundlage für medizinische Zwecke und Anwendungen, z.B. bei Schuppenflechte, Neurodermitis und Allergien.Hierbei können manche auf Schlachthöfen und in der weiterverarbeitenden Lebensmittelindustrie anfallenden Abfälle wegen ihres Gehaltes an Hormone, Vitaminen und anderen eine nutzbringende Verwendung finden. Sonst unstabile Emulsionen lassen sich ohne weitere Hilfsmittel und oft auch ohne Konservierungsmittel stabilisieren und haltbar machen.

Weiter ist es vorteilhaft, daß man die breiartige Substanz zur Impfung für andere Bakteriennährböden, insbesondere eiweishaltige, verwendet. So kann man z.B. in Brauereien anfallende Bierheferückstände ebenso wie Bierhefe, aber auch andere Hefen, sogar Abwasserbakterien unter ihrer eigenen Vernichtung zur Beseitigung von Ölen einsetzen.

Es ist auch möglich, daß man die breiartige Substanz oder das mit ihr hergestellte Produkt als Düngemittel oder zur Düngemittelherstellung benutzt.

Vorteilhaft kann es auch sein, daß man die breiartige Substanz zur Herstellung von Klebstoffen verwendet.

## Patentansprüche

1. Verfahren zur Herstellung eines Grundstoffes für die Weiterverarbeitung in der chemischen Industrie sowie die Verwendung in der Beseitigung von Erd- und anderen Ölen und Fetten sowie deren Produkten, von Kohlenwasserstoffen und in der Müllkompostierung,
dadurch gekennzeichnet,
daß man Kalziumhydroxid oder andere Hydroxide der Erdalkali- oder Alkalimetalle und mineralisches und/oder pflanzliches und/oder tierisches Öl oder Fett im Verhältnis 1:95 bis 95:5 zusammengibt und unter Zusatz von einer geringen Menge Milcheiweis enthaltender Stoffe unter Zugabe einer noch geringeren Menge Milch rührt und dadurch eine breiartige Substanz erhält.

2. Verfahren nach Anspruch 1,
dadurch gekennzeichnet,
daß man die breiartige Substanz zum Aufsaugen und Einschließen von Öl und/oder Fett verwendet.

3. Verfahren nach Anspruch 1,
dadurch gekennzeichnet,
daß man die breiartige Substanz als Nährboden für Bakterien verwendet.

4. Verfahren nach Anspruch 1,
dadurch gekennzeichnet,
daß man die breiartige Substanz als Grundstoff für die Herstellung von festen bis schaumartigen Kunststoffen verwendet.

5. Verfahren nach Anspruch 1,
dadurch gekennzeichnet,
daß man die breiartige Substanz als Grundstoff für die Herstellung von Farben und Lacken verwendet, insbesondere für die Herstellung ungiftiger Druckfarben.

6. Verfahren nach Anspruch 1,
dadurch gekennzeichnet,
daß man die breiartige Substanz als Grundstoff für die Herstellung von kosmetischen Artikeln,Seifen, Reinigungsmittel und Salben verwendet.

7. Verfahren nach Anspruch 1,
dadurch gekennzeichnet,
daß man Milcheiweiß verwendet, welches mit lebenden Bakterien durchsetzt ist.

8. Verfahren nach Anspruch 1,
dadurch gekennzeichnet,
daß man die breiartige Substanz zur Impfung für andere Bakteriennährböden, insbesondere eiweishaltige, verwendet.

9. Verfahren nach Anspruch 1,
dadurch gekennzeichnet,
daß man die breiartige Substanz oder das mit ihr hergestellte Produkt als Düngemittel, oder zur Düngemittelherstellung benutzt.

10. Verfahren nach Anspruch 1,
dadurch gekennzeichnet,
daß man die breiartige Substanz zur Herstellung von Klebstoffen verwendet.
